# EUROPÄISCHE PATENTSCHRIFT

(11) **EP 0 648 928 B1**
(45) Veröffentlichungstag und Bekanntmachung des Hinweises auf die Patenterteilung: **21.01.1998**
(21) Anmeldenummer: 94115547.5
(22) Anmeldetag: 04.10.1994
(51) Int. Cl.: F02F 7/00, F16C 9/02

(54) **Brennkraftmaschine mit einer in einem Zylinderblock über Lagerdeckel fixierten Kurbelwelle**
Internal combustion engine with the crankshaft mounted over bearing caps in a crankcase
Machine à combustion interne avec un vilebrequin agencé par des chapeaux des paliers dans un bâtiment moteur

(30) Priorität: 09.10.1993 DE 4334444
(43) Veröffentlichungstag der Anmeldung: 19.04.1995
(73) Patentinhaber: FORD-WERKE AKTIENGESELLSCHAFT, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Meurer, Josef, D-53844 Troisdorf (DE); Metz, Hans-Walter, D-50259 Pulheim (DE); Weber, Gottfried, D-50672 Köln (DE); Lenerz, Edmund, Hatfield Prverel, Essex CM3 2NT (GB)
(74) Vertreter: Messulam, Alec Moses

(56) Entgegenhaltungen:
- EP-A- 0 526 825
- DE-C- 4 110 664
- GB-A- 843 527
- US-A- 1 713 597
- US-A- 5 009 205

## Beschreibung

Die Erfindung bezieht sich auf eine Brennkraftmaschine mit einer in einem Zylinderblock über Lagerdeckel fixierten Kurbelwelle und einem unten am Zylinderblock an dessen Rändern und an den Lagerdeckeln abgestützten Versteifungsbauteil.

Aus der DE-PS 33 22 861 ist eine Brennkraftmaschine mit einer in einem Zylinderblock und einem unteren Versteifungsbauteil fixierten Kurbelwelle bekannt, bei der die Befestigung der beiden Bauteile darauf ausgelegt ist, Querkräfte an der Verbindungsstelle beider Bauteile zweckentsprechend aufzunehmen.

Aus der DE-PS 35 32 599 ist eine Brennkraftmaschine mit einer in einem Zylinderblock über Lagerdeckel fixierten Kurbelwelle bekannt, wobei die Brennkraftmaschine über Tragteile abgestützt wird, die am Zylinderblock über Befestigungsstellen mit Einstellelementen zum Ausgleich von Herstellungs- und Montagetoleranzen verbunden sind.

Aus der DE-OS 42 28 689 ist eine Brennkraftmaschine mit einer in einem Zylinderblock über Lagerdeckel fixierten Kurbelwelle und einem unten am Zylinderblock an dessen Ränder und an den Lagerdeckeln abgestützten Versteifungsbauteil bekannt, wie sie im Oberbegriff des vorliegenden Patentanspruches 1 erläutert ist.

Der Sinn und Zweck solcher unten am Zylinderblock an dessen Ränder und an den Lagerdeckeln abgestützten Versteifungsbauteile ist es, die Gesamtsteifigkeit der Brennkraftmaschine wesentlich zu erhöhen und hierdurch die Laufruhe der Brennkraftmaschine zu verbessern und deren Geräuschabstrahlung zu verringern.

Bei der bekannten Brennkraftmaschine wird das Versteifungsbauteil einmal in herkömmlicher Weise über Schraubenbolzen mit den Rändern des Zylinderblockes verbunden und zum anderen erstrecken sich vom Versteifungsbauteil weitere Schraubenbolzen unmittelbar in Gewindebohrungen in den Lagerdeckel der Kurbelwelle hinein.

Dadurch soll bei einer Brennkraftmaschine mit von einer bisher üblichen Bauform abgeleiteten Ausführung mit einer in getrennten Lagerdeckeln fixierten Kurbelwelle eine gegenseitige Abstützung der Lagerdeckel und des Versteifungsbauteiles in Querrichtung, also Querkräfte aufnehmend, erreicht werden.

Bei der bekannten Brennkraftmaschine ist es erforderlich, die ursprüngliche Form herkömmlicher Lagerdeckel der Kurbelwelle erheblich zu verändern, um die entsprechende Verbindung zum Versteifungsbauteil herzustellen.

Die Aufgabe der Erfindung ist es, eine Brennkraftmaschine mit einer in einem Zylinderblock über Lagerdeckel fixierten Kurbelwelle und einem unten am Zylinderblock an dessen Ränder und an den Lagerdeckeln abgestützten Versteifungsbauteil derart zu verbessern, daß die ursprüngliche Form der Lagerdeckel der Kurbelwelle und deren Befestigung weitgehend beibehalten werden kann und dennoch für eine Querkräfte übertragende Verbindung zwischen den Lagerdeckeln und dem Versteifungsbauteil Sorge getragen wird.

Gemäß der Erfindung wird diese Aufgabe gelöst, indem bei einer Brennkraftmaschine nach dem Oberbegriff des Patentanspruches 1 die im Kennzeichenteil des Patentanspruches 1 aufgeführten Maßnahmen verwirklicht werden.

Dadurch, daß die inneren Verbindungsstellen über den Schraubenbolzen der Lagerdeckel für die Kurbelwelle liegen, die Schraubenbolzen der Lagerdeckel mit einem zylindrischen Abschnitt versehen oder verbunden sind und darauf über eine Preßpassung Distanzhülsen angeordnet sind, die einen Gewindeabschnitt zur Aufnahme der Verschraubung für die inneren Verbindungsstellen des Versteifungsbauteiles aufweisen, kann die ursprüngliche Form der Lagerdeckel für die Kurbelwelle und deren Schraubenbolzen weitgehend beibehalten werden und trotz unvermeidlicher Lagetoleranzen eine Querkräfte aufnehmende Verbindung des Versteifungsbauteiles zu den Lagerdeckeln sichergestellt werden.

Dadurch, daß der zylindrische Abschnitt an den Schraubenbolzen für die Lagerdeckel der Kurbelwelle als Außendurchmesser ausgebildet ist und von einer mit Preßpassung aufgesetzten Distanzhülse umfaßt wird, wobei die Distanzhülse ein Innengewinde zur Aufnahme eines Schraubenbolzens zur Befestigung des Versteifungsbauteiles und eine Ringschulter zur Abstützung von Hülsenansätzen am Versteifungsbauteil aufweist, können axiale und radiale Herstellungs- und Montagetoleranzen zwischen den miteinander zu verbindenden Bauteilen ausgeglichen werden und dennoch eine Übertragung von Querkräften über den Reibschluß zwischen den Ringflächen an der Ringschulter und an den Hülsenansätzen und den Formschluß zwischen der Distanzhülse und dem Schraubenbolzen des Lagerdeckels sichergestellt werden.

Dadurch, daß der zylindrische Abschnitt an den Schraubenbolzen für die Lagerdeckel der Kurbelwelle als Außendurchmesser ausgebildet ist und von der mit Preßpassung aufgesetzten Distanzhülse umfaßt wird, wobei diese unmittelbar mit einem Schraubenbolzen mit Gewinde zur Aufnahme einer Schraubenmutter verbunden ist, können sich Ansätze am Versteifungsbauteil unmittelbar am Ringabsatz an der Distanzhülse abstützen.

Die Erfindung wird anhand einiger in den Figuren gezeigten Ausführungsbeispiele näher erläutert. Es zeigt:
- Fig. 1: eine vertikalen Teilschnitt durch eine erfindungsgemäße innere Verbindungsstelle zwischen einem Lagerdeckel der Kurbelwelle und dem Versteifungsbauteil für den Zylinderblock;
- Fig. 2: eine weitere Ausführungsform der inneren Verbindungsstelle zwischen dem Lagerdeckel der Kurbelwelle und dem Versteifungsbauteil für den Zylinderblock;
- die Figuren 3 und 4: eine weitere Ausführungsform der inneren Verbindungsstelle zwischen dem Lagerdeckel der Kurbelwelle und dem Versteifungsbauteil des Zylinderblockes in einem vertikalen Quer- bzw. Längsschnitt und
- die Figuren 5 und 6: eine weitere Ausführungsform der Verbindungsstelle zwischen dem Lagerdeckel der Kurbelwelle und dem Versteifungsbauteil des Zylinderblockes.
- Fig. 7: eine weitere Ausführungsform einer Verbindung ähnlich Fig. 5.

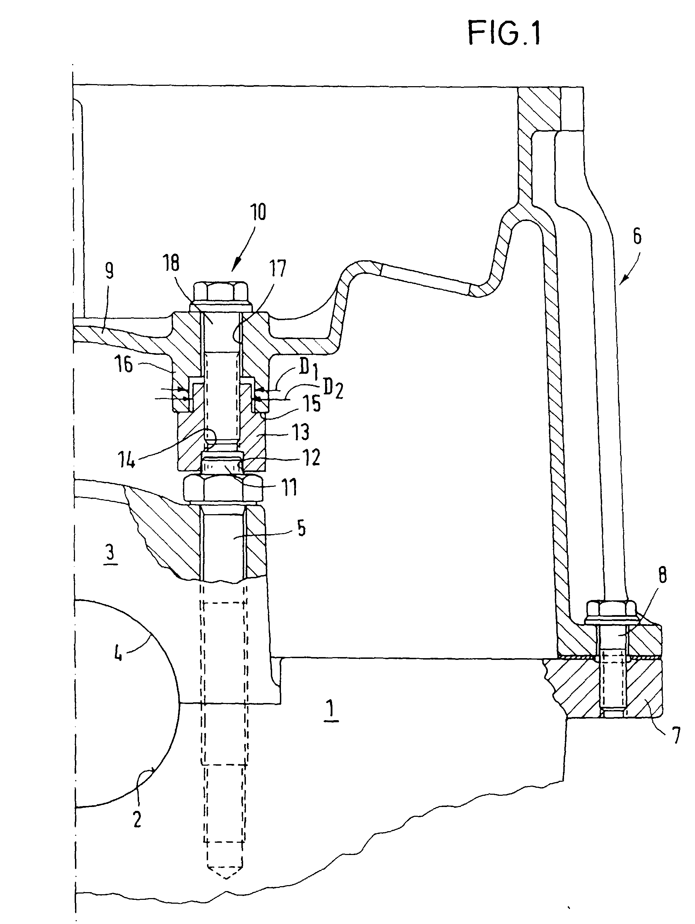

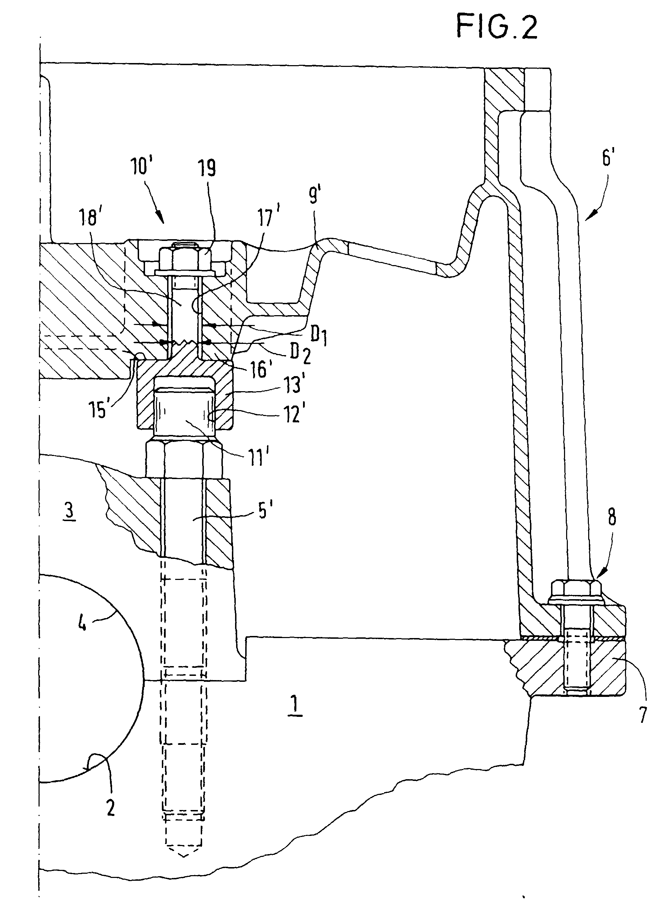

In den Figuren 1 und 2 sind im wesentlichen übereinstimmende Bauteile mit den gleichen Bezugszeichen versehen und nachfolgend wird der generelle Aufbau der Anordnung beschrieben.

Ein Teilbereich des Zylinderblockes 1 einer Brennkraftmaschine ist angedeutet und bildet im Bereich sogenannter Lagerstühle den unteren Teil 2 einer Lagerbohrung für die Kurbelwelle (nicht gezeigt). Ein Lagerdeckel 3 bildet den oberen Teil 4 einer Lagerbohrung für die Kurbelwelle und ist mit dem Zylinderblock 1 über zumindest zwei Schraubenbolzen 5 verbunden.

Ein Versteifungsbauteil 6 für den Zylinderblock 1 ist mit dessen seitlichen Rändern 7 über eine Vielzahl von Verschraubungen 8 unter Zwischenschaltung einer üblichen Dichtung verbunden.

Um die Versteifungswirkung dieses Versteifungsbauteiles 6 zu erhöhen, wird angestrebt, daß der großflächige Bodenbereich 9 des Verstärkungsbauteiles über zusätzliche Verbindungsstellen 10 abgestützt wird.

Gemäß der Erfindung werden diese zusätzlichen Verbindungsstellen über den Schraubenbolzen 5 der Lagerdeckel 3 für die Kurbelwelle vorgesehen.

Zunächst wird die Ausführungsform der Verbindungsstelle nach Fig. 1 und nachfolgend wird die Ausführungsform der Verbindungsstelle gemäß Fig. 2 beschrieben, wobei die weitgehend übereinstimmenden Bauteile in Fig. 2 mit einem Strichindex versehen sind.

In Fig. 1 ist der Schraubenbolzen 5 mit einem zylindrischen Ansatz 11 versehen, der vom Innendurchmesser 12 einer mit Preßpassung aufgesetzten Distanzhülse 13 umfaßt wird. Die Distanzhülse 13 weist ein Innengewinde 14 und eine äußere Ringschulter 15 auf. Der Boden 9 des Versteifungsbauteiles 6 ist mit Hülsenansätzen 16 versehen, die eine Durchgangsbohrung 17 für einen Schraubenbolzen 18 aufweisen.

Der Schraubenbolzen 18 wird durch die Bohrung 17 in das Innengewinde 14 der Distanzhülse 13 eingeschraubt und kann mit einem gewünschten Drehmoment festgezogen werden.

Treten hierbei zwischen der Ringschulter 15 und den Hülsenansätzen 16 axiale Toleranzen auf, so kann sich die Distanzhülse 13 unter der Wirkung der Schraubenkraft so weit axial verlagern, bis ein erwünschter Reibschluß zwischen den Ringflächen an dem Hülsenansatz 16 und der Ringschulter 15 erreicht wird. Durch die mit D1 und D2 bezeichneten unterschiedlichen Durchmesser im Bereich der einander übergreifenden Hülsenansätze und Ringschultern wird ein radialer Ausgleich von Herstellungs- und Montagetoleranzen sichergestellt.

Bei der Ausführungsform nach Fig. 2 ist die erfindungsgemäße innere Verbindungsstelle im wesentlichen ähnlich ausgebildet. Am Schraubenbolzen 5' für den Lagerdeckel 3 der Kurbelwelle ist ein zylindrischer Ansatz 11' etwas größer ausgebildet und wird vom Innendurchmesser 12' einer anderen Distanzhülse 13' umfaßt, die unmittelbar mit einem Schraubenbolzen 18' fest verbunden ist, der sich durch eine Durchgangsbohrung 17' erstreckt. Die so an der Distanzhülse 13' ausgebildete Ringschulter 15' kommt in Anlage gegen einen entsprechenden Hülsenansatz 16' am Boden 9' des Versteifungsbauteiles 6' und über die auf den Schraubenbolzen 18' aufgesetze Schraubenmutter 19 kann wieder eine Verspannkraft aufgebracht werden, mit der die Distanzhülse 13' zum Ausgleich von axialen Toleranzen verlagert werden kann, wobei der Ausgleich von radialen Toleranzen wieder über die entsprechenden unterschiedlichen Durchmesser D1 und D2 ermöglicht wird.

Ergänzend wird noch darauf hingewiesen, daß das Versteifungsbauteil 6 bzw. 6', wie aus der DE-PS 42 28 689 von Mazda ersichtlich, als ein Versteifungsbauteil ausgebildet werden kann, das noch von einer gesonderten Ölwanne übergriffen wird, andererseits kann das Versteifungsbauteil auch derart ausgebildet werden, daß es unmittelbar in einem Bauteil eine entsprechende Ölwanne mit ausbildet.

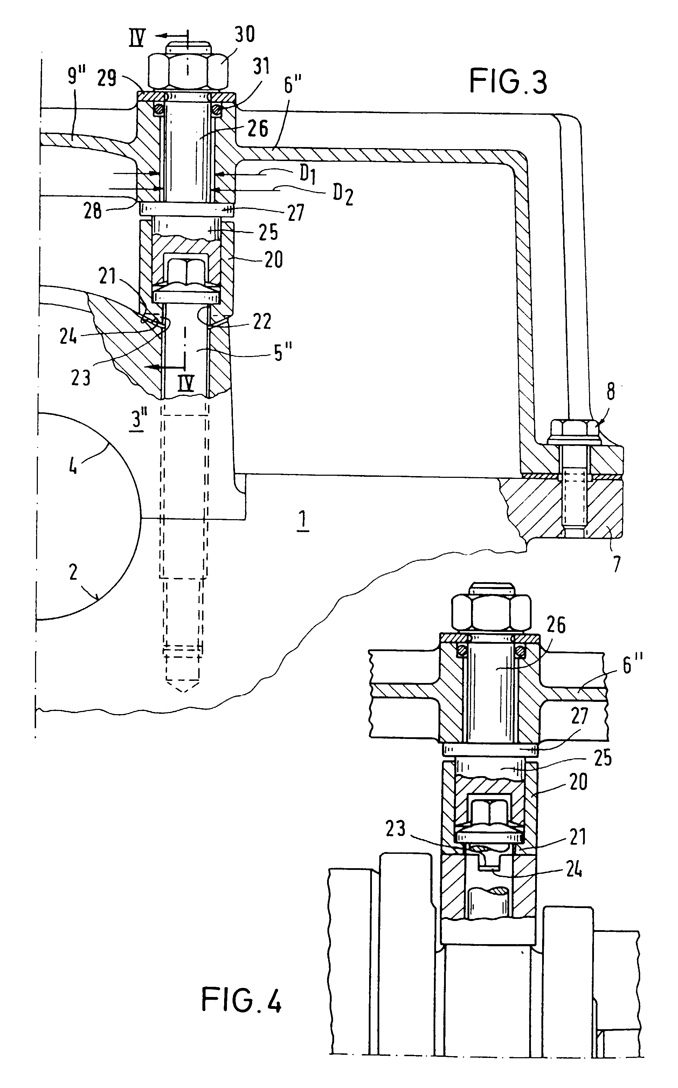

Die in den Figuren 3 bis 6 gezeigten weiteren Ausführungsformen der Erfindung sind insbesondere für eine derartige Ausführungsform des Versteifungsbauteiles vorgesehen.

In den Figuren sind wieder übereinstimmende Bauteile mit den gleichen Bezugszeichen und geringfügig abgeänderte Bauteile mit den entsprechenden mit Strichindexen erweiterten Bezugszeichen versehen.

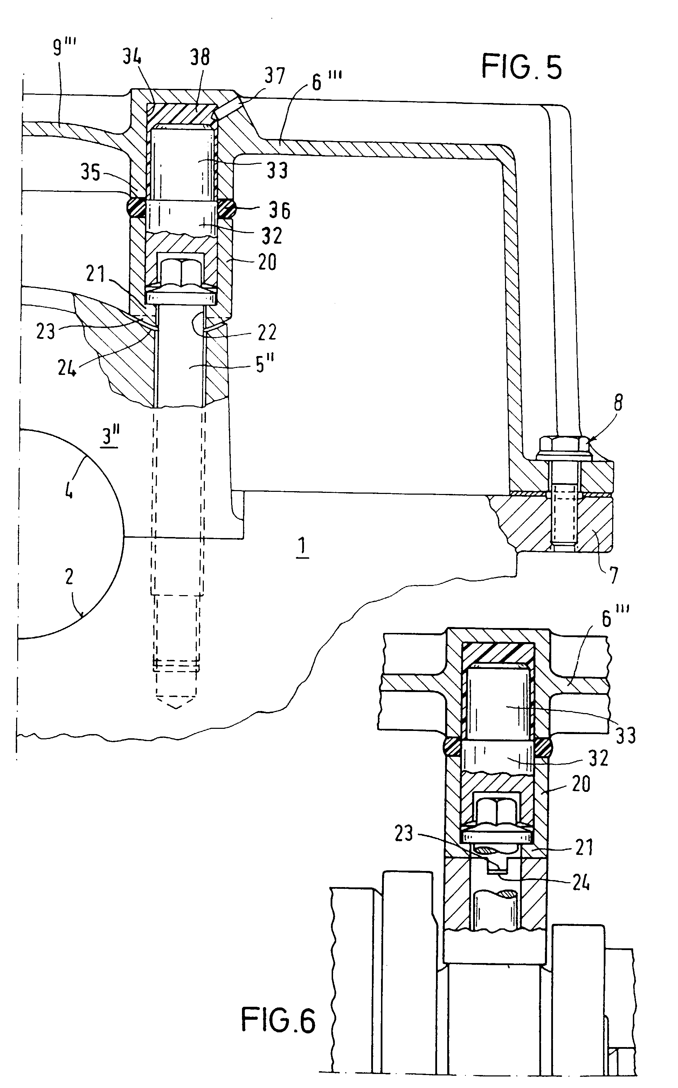

In den Figuren 3 und 4 ist eine Ausführungsform gezeigt, bei der wieder ein Lagerdeckel 3'' über einen Schraubenbolzen 5'' am Zylinderblock 1 befestigt ist. Eine Distanzhülse 20 ist mit einem Boden 21 mit einer Durchtrittsbohrung 22 für den Schraubenbolzen 5'' versehen und außen am Boden 21 kann wahlweise ein kreisbogenförmiger, rechteckiger Vorsprung 23 ausgebildet sein, der mit einer entsprechenden kreisbogenförmigen, rechteckigen Nut 24 im Lagerdeckel 3 formschlüssig zusammenwirkt, um eine Verdrehsicherung für die Distanzhülse 20 zu bilden. Eine solche Verdrehsicherung ist nicht in allen Fällen erforderlich.

In der Distanzhülse 20 wird mit einer Preßpassung ein zylindrischer Abschnitt 25 eines Schraubenbolzens 26 aufgenommen, der einen Bund 27 zur Abstützung eines Hülsenansatz 28 des Versteifungsbauteiles 6'' aufweist. Über eine am Ende des Schraubenbolzens 26 angeordnete Unterlegscheibe 29 wird das Versteifungsbauteil 6'' mittels einer Schraubenmutter 30 verspannt. Eine zusätzliche O-Ring Dichtung 31 verhindert den Austritt von Schmiermittel entlang der Befestigung.

Der axiale Ausgleich von Herstellungs- und Montagetoleranzen erfolgt wieder durch eine Verschiebemöglichkeit innerhalb der Preßpassung und die Übertragung der Querkräfte wird wieder über den Reibschluß am Bund 27 und dem Hülsenansatz 28 sichergestellt. Der Ausgleich von radialen Toleranzen wird wieder über die unterschiedlichen Durchmesser D1 und D2 sichergestellt.

In den Figuren 5 und 6 ist eine Befestigungsanordnung ähnlich den Figuren 3 und 4 gezeigt, d.h. die Befestigung des Lagerdeckels 3 am Zylinderblock 1 mittels dem Schraubenbolzen 5'' und der über Formschluß festgelegten Distanzhülse 20 entspricht dem Aufbau in den Figuren 3 und 4.

Anstelle des Schraubenbolzens wird hier jedoch ein Verbindungsbolzen 32 mit seinem zylindrischen Abschnitt über eine Preßpassung in der Distanzhülse 20 festgelegt und ragt mit seinem anderen Abschnitt 33 in eine Sackbohrung 34 in einem Hülsenansatz 35 im Boden 9''' des Versteifungsbauteiles 6''' ein. Zwischen der Distanzhülse 20 und dem Hülsenansatz 35 am Versteifungsbauteil 6''' ist eine O-Ring Dichtung 36 angeordnet. In die Sackbohrung 34 führt von außen eine Bohrung 37.

Die Befestigung bei dieser Ausführungsform wird nachfolgend erläutert:
Das Versteifungsbauteil 6''' wird in üblicher Weise über die an den Rändern des Zylinderblockes vorgesehenen Verschraubungen festgelegt und darauffolgend kann die Brennkraftmaschine z.B. einen Motortest durchlaufen, so daß sich verschiedene Bauteile setzen. Nachfolgend diesem Motortest wird nun in den Zwischenraum zwischen dem Abschnitt 33 des Verbindungsbolzens 32 und der Sackbohrung 34 ein aushärtbares Material 38, z.B. Kunststoff, über die Bohrung 37 eingespritzt und härtet aus. Damit wird ein Ausgleich von axialen und radialen Herstellungs- und Montagetoleranzen erzielt und durch die Verschiebemöglichkeit der Preßpassung kann später dennoch das z.B. die Motorölwanne bildende Versteifungsbauteil 6''' für eine erforderliche Wartung der Brennkraftmaschine nachträglich demontiert und wieder montiert werden.

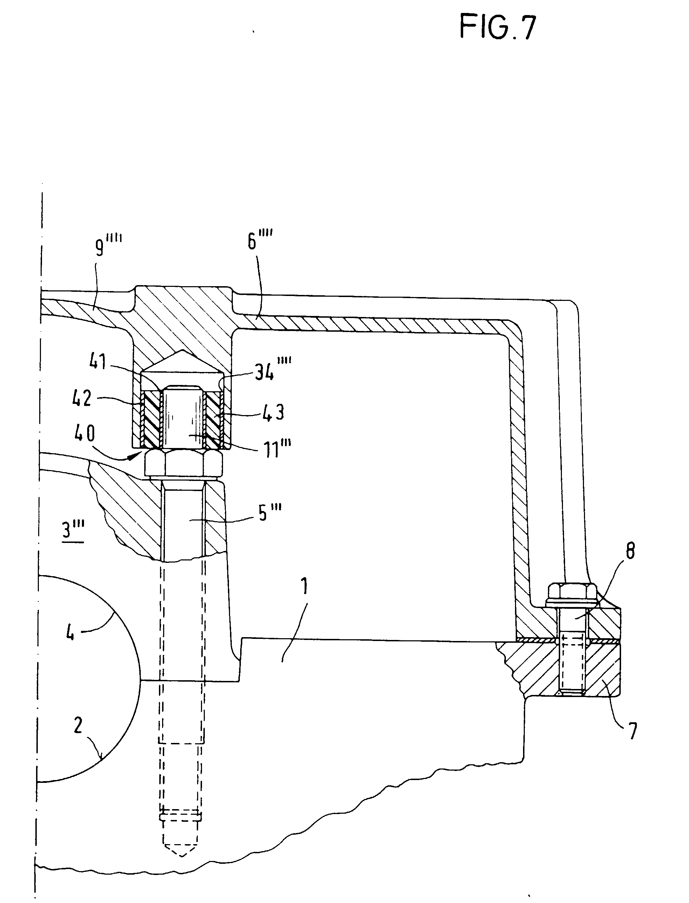

Bei der in Fig. 7 gezeigten Ausführungsform der Befestigung des Versteifungsbauteiles 6'''' ist an diesem wieder eine Sackbohrung 34'''' ausgebildet und die Lagerdeckel 3''' sind am Zylinderblock 1 über Schraubenbolzen 5''' mit über ihren Schraubenkopf hinausgehenden zylindrischen Ansätzen 11''' befestigt.

Eine Art Silentblock 40 bestehend aus einem Innenmantel 41, einem Außenmantel 42 und einem dazwischen angeordneten Ring 43 aus Kunststoffmaterial ist einerseits auf dem zylindrischen Ansatz 11''' und andererseits in der Sackbohrung 34'''' aufgenommen.

Die Elastizität des Silentblockes 40 wird hierbei so ausgelegt, daß zwar bei der Montage des Versteifungsbauteiles ein Ausgleich von Lagetoleranzen ermöglicht wird, daß aber bei Betrieb der Brennkraftmaschine auftretende Querschwingungen des Versteifungsbauteiles durch das elastische Material dämpfend über die Schraubenbolzen der Lagerdeckel am Zylinderblock abgestützt werden.

Ebenso kann der Außenmantel des Silentblockes konisch ausgebildet sein und mit einer entsprechend konisch ausgebildeten Sackbohrung im Versteifungsbauteil zusammenwirken.

Der Vorteil der vorliegenden Erfindung ist darin zu sehen, daß die erwünschten inneren Verbindungsstellen zwischen dem Versteifungsbauteil für den Zylinderblock und den Lagerdeckeln der Kurbelwelle vorgenommen werden können, ohne daß hierfür die z.B. bei einer bereits in Großserie hergestellte Brennkraftmaschine vorliegenden Bearbeitungsvorgänge der Lagerdeckel der Kurbelwelle, deren Verschraubung und dergleichen geändert werden müssen.

## Patentansprüche

1. Brennkraftmaschine mit einer in einem Zylinderblock (1) über Lagerdeckel (3) fixierten Kurbelwelle und einem unten am Zylinderblock (1) an dessen Rändern (7) und an inneren Verbindungsstellen (10) an den Lagerdeckeln (3) verbundenen Versteifungsbauteil (6),
**dadurch gekennzeichnet,** daß
- die inneren Verbindungsstellen (10) über den Schraubenbolzen (5) der Lagerdeckel (3) für die Kurbelwelle vorgesehen sind,
- die Schraubenbolzen (5) mit einem zylindrischen Ansatz (11) versehen sind und
- darauf Distanzhülsen (13) über eine Preßpassung aufgenommen werden und die Distanzhülse (13) einen Gewindeabschnitt (14 bzw. 18') zur Aufnahme der Verschraubung für die inneren Verbindungsstellen (10) des Versteifungsbauteiles (6 bzw. 6') aufweisen.

2. Brennkraftmaschine mit inneren Verbindungsstellen nach Anspruch 1,
**dadurch gekennzeichnet,** daß
- der zylindrische Ansatz (11) am Schraubenbolzen (5) für den Lagerdeckel (3) als Außendurchmesser ausgebildet ist und von der mit Preßpassung (bei 12) aufgesetzten Distanzhülse (13) umfaßt wird, wobei
- die Distanzhülse (13) ein Innengewinde (14) zur Aufnahme eines Schraubenbolzens (18) zur Befestigung des Versteifungsbauteiles (6) und eine Ringschulter (15) zur Abstützung des Versteifungsbauteiles (6) über dessen Hülsenansätze (16) aufweist.

3. Brennkraftmaschine mit inneren Verbindungsstellen nach Anspruch 1,
**dadurch gekennzeichnet,** daß
- der zylindrische Abschnitt (11) an dem Schraubenbolzen (5) für den Lagerdeckel (3) der Kurbelwelle als Außendurchmesser ausgebildet ist und von der mit Preßpassung (bei 12') aufgesetzten Distanzhülse (13') umfaßt wird und
- die Distanzhülse (13') unmittelbar mit einem Schraubenbolzen (18') zur Aufnahme einer Schraubenmutter (19) verbunden ist und an der Distanzhülse (13') ein Ringabsatz (15') und am Versteifungsbauteil (6') Hülsenansätze (16') vorgesehen sind.

4. Brennkraftmaschine mit inneren Verbindungsstellen nach Anspruch 1,
**dadurch gekennzeichnet,** daß
- die Distanzhülse (20) mit einem Boden (21) mit einer Durchtrittsöffnung (22) für den Schraubenbolzen (5'') des Lagerdeckels (3'') versehen ist,
- der Boden (21) der Distanzhülse (20) wahlweise über eine z.B. Nut/Feder-Verbindung (23/24) drehfest mit dem Lagerdeckel (3'') verbunden ist und
- die Distanzhülse (20) einen zylindrischen Abschnitt aufweist, in dem mit Preßpassung ein Ende eines Befestigungsbolzens (25) aufgenommen ist, der einen Gewindeabschnitt (26) aufweist und über seinen Ringbund (27) am Hülsenansatz (28) des Versteifungsbauteiles (6'') vermittels einer über eine Unterlegscheibe (29) einwirkende Schraubenmutter (30) verspannbar ist und die Verbindung über eine O-Ring Dichtung (31) abgedichtet ist.

5. Brennkraftmaschine mit inneren Verbindungsstellen nach Anspruch 1,
**dadurch gekennzeichnet,** daß
- die Distanzhülse (20) unmittelbar durch die Schraubenbolzen (5'') der Lagerdeckel (3'') wahlweise über eine z.B. Nut/Feder-Anordnung (23/24) drehfest festgelegt ist und
- die Distanzhülse (20) einen inneren zylindrischen Abschnitt aufweist, in dem mit Preßpassung das eine Ende eines Verbindungsbolzens (32) aufgenommen wird, dessen anderes Ende einen im Durchmesser verringerten Abschnitt (33) aufweist, der sich in eine Sackbohrung (34) in einem Hülsenansatz (35) im Versteifungsbauteil (6''') hineinerstreckt,
- zwischen der Distanzhülse (20) und dem Hülsenansatz (35) eine O-Ring Dichtung (36) angeordnet ist und
- der Zwischenraum zwischen dem zylindrischen Abschnitt (33) des Verbindungsbolzens (32) und der Sackbohrung (34) im Hülsenansatz (35) durch ein aushärtendes Material (38), z.B. Kunststoffmaterial, ausgefüllt wird, das über eine Bohrung (37) unter Druck einführbar ist.

6. Brennkraftmaschine mit inneren Verbindungsstellen nach Anspruch 1,
**dadurch gekennzeichnet,** daß
- die Distanzhülse in Form eines Silentblockes (40), bestehend aus einem zwischen einem Innenmantel (41) und einem Außenmantel (42) aufgenommenen Ring (43) aus Kunststoffmaterial ausgebildet ist, wobei
- deren Innenmantel (41) auf den zylindrischen Ansätzen (11''') der Schraubenbolzen (5''') und
- deren Außenmantel (43) in einer Sackbohrung (34''') im Versteifungsbauteil (6'''') aufgenommen wird.

7. Brennkraftmaschine nach Anspruch 6,
**dadurch gekennzeichnet,** daß
- entweder einer der mit den Maschinenbauteilen zusammenwirkenden Innen- oder Außenmantel (41 oder 42) des Silentblockes (40) konisch ausgebildet ist.

8. Brennkraftmaschine mit inneren Verbindungsstellen nach Anspruch 6,
**dadurch gekennzeichnet,** daß
- der Silentblock (40) sowohl an seinem Innen- und Außenmantel (41 und 42) konisch ausgebildet ist.

## Claims

1. Internal combustion engine having a crankshaft fixed in an engine block (1) by means of bearing caps (3) and a stiffening member (6) connected at the bottom to the engine block (1) at its edges (7) and at internal connection points (10) to the bearing caps (3),
characterised in that
- the internal connection points (10) are provided by the screw bolts (5) of the bearing caps (3) for the crankshaft,
- the screw bolts (5) are provided with a cylindrical extension (11), and
- spacer sleeves (13) are fitted thereon with a press fit, the spacer sleeves (13) having a threaded portion (14 or 18') to receive the screw connection for the internal connection points (10) of the stiffening member(6 or 6').

2. Internal combustion engine having internal connection points according to claim 1,
characterised in that
- the cylindrical extension (11) on the screw bolt (5) for the bearing cap (3) forms the major diameter and is surrounded by the spacer sleeve (13), which is put on with a press fit (at 12), and
- the spacer sleeve (13) has an internal thread (14) to receive a screw bolt (14) to secure the stiffening member (6) and an annular shoulder (15) to support the stiffening member (6) through its socket extensions (16).

3. Internal combustion engine having internal connection points according to claim 1,
characterised in that
- the cylindrical portion (11) is formed on the screw bolt (5) for the bearing cap (3) of the crankshaft as the external diameter and is surrounded by the spacer sleeve (13'), which is put on with a press fit (at 12'), and
- the spacer sleeve (13') is directly connected to a screw bolt (18') to receive a nut (19) and the spacer sleeve (13') is provided with an annular step (15') and socket extensions (16') are provided on the stiffening member (6').

4. Internal combustion engine having internal connection points according to claim 1,
characterised in that
- the spacer sleeve (20) is provided with a through opening (22) for the screw bolt (5'') of the bearing cap (3''),
- the base of the spacer sleeve (20) is optionally connected non-rotatably to the bearing cap (3'') by means e.g. of a key and groove connection (23/24), and
- the spacer sleeve (20) has a cylindrical portion in which is received, with a press fit, one end of a securing bolt (25) which has a threaded portion (26) and can be braced by way of its annular collar (27) against the socket extension (28) of the stiffening member (6'') by means of a nut (30) acting through a washer (29) and the connection is sealed by means of a O-ring seal (31).

5. Internal combustion engine having internal connection points according to claim 1,
characterised in that
- the spacer sleeve (20) is held non-rotatably directly by the screw bolt (5'') of the bearing cap (3''), optionally by means e.g. of a key and groove connection (23/24), and
- the spacer sleeve (20) has an internal cylindrical portion in which is received, with a press fit, one end of a fastening bolt (32) the other end of which has a portion of reduced diameter which extends into a blind bore (34) in a socket extension (35) in the stiffening member (6'''),
- an O-ring seal (36) is disposed between the spacer sleeve (20) and the socket extension (35),and
- the space between the cylindrical portion (33) of the fastening bolt (32) and the blind bore (30) in the socket extension (35) is filled with a hardenable material (38), e.g. plastics material, which can be introduced under pressure through a bore (37).

6. Internal combustion engine having internal connection points according to claim 1,
characterised in that
- the spacer sleeve is in the form of a silentbloc (40), comprising a ring (43) of plastics material received between an inner jacket (41) and an outer jacket (42),
- its inner jacket (41) being received on the cylindrical extensions (11''') of the screw bolts (5''') and
- its outer jacket (43) being received in a blind bore (34''') in the stiffening member (6"").

7. Internal combustion engine according to claim 6,
characterised in that
- either one of the inner and outer jackets (41 or 42) cooperating with the engine components is conical in shape.

8. Internal combustion engine having internal connection points according to claim 6,
characterised in that
- the silentbloc (40) is conical in shape at both its inner and its outer jacket (41, 42).

## Revendications

1. Moteur à combustion interne possédant un vilebrequin fixé dans un bloc-cylindres (1) à l'aide de chapeaux de paliers (3) et une pièce de raidissement ou raidisseur (6) appuyé en bas au bloc-cylindres (1), sur les bords (7) de celui-ci et, à des points de liaison internes (10), aux chapeaux de paliers (3), caractérisé en ce que
- les points de liaison intérieurs (10) sont prévus au-dessus des vis (5) des chapeaux de paliers (3) pour le vilebrequin,
- les vis (5) sont pourvues d'un embout cylindrique (11) et
- des douilles d'écartement (13) sont reçues par un ajustage serré sur ces embouts et pourvues d'une partie filetée (14 ou 18') destinée à recevoir l'élément vissé d'assemblage pour les points de liaison internes (10) du raidisseur (6 ou 6').

2. Moteur à combustion interne comportant des points de liaison internes selon la revendication 1, caractérisé en ce que
- l'embout cylindrique (11) sur la vis (5) pour le chapeau de palier (3) est un embout à diamètre extérieur et est entouré de la douille d'écartement (13) disposée sur lui à ajustage serré (en 12),
- la douille d'écartement (13) présentant un filetage intérieur (14) destiné à recevoir une vis (18) pour la fixation du raidisseur (6) et un épaulement annulaire (15) pour l'appui du raidisseur (6) par l'intermédiaire d'un appendice tubulaire (16) de ce raidisseur.

3. Moteur à combustion interne comportant des points de liaison internes selon la revendication 1, caractérisé en ce que
- la partie cylindrique (11) sur la vis (15) pour le chapeau de palier (3) du vilebrequin est réalisée comme une partie à diamètre extérieur et est entourée de la douille d'écartement (13') disposée sur elle à ajustage serré (en 12') et
- la douille d'écartement (13') est reliée d'un seul tenant à une tige filetée (18') destinée à recevoir un écrou (19), la douille d'écartement (13') étant pourvue d'un épaulement annulaire (15') et le raidisseur (6') étant pourvu d'appendices tubulaires (16').

4. Moteur à combustion interne comportant des points de liaison internes selon la revendication 1, caractérisé en ce que
- la douille d'écartement (20) est pourvue d'un fond (21) traversé d'une ouverture de passage (22) pour la vis (5") du chapeau de palier (3"),
- le fond (21) de la douille d'écartement (20) est relié, si désiré, sans pouvoir tourner par rapport à lui au chapeau de palier (3"), par exemple par une liaison du type à rainure et clavette, et
- la douille d'écartement (20) présente une partie cylindrique dans laquelle est reçue, à ajustage serré, une extrémité d'une tige de fixation (25) qui présente une partie filetée (26) et peut être serrée, à l'aide d'un collet annulaire (27) prévu sur cette tige, contre l'appendice tubulaire (28) du raidisseur (6") au moyen d'un écrou (30) agissant par l'intermédiaire d'une rondelle (29), la liaison étant étanchée par un joint torique (31).

5. Moteur à combustion interne comportant des points de liaison internes selon la revendication 1, caractérisé en ce que
- la douille d'écartement (20) est serrée directement par la vis (5") du chapeau de palier (3"), si désiré sans rotation relative possible, par exemple à l'aide d'un dispositif du type à rainure et clavette (23/24),
- la douille d'écartement (20) présente une partie cylindrique intérieure dans laquelle est reçue, à ajustage serré, une extrémité d'une tige d'assemblage (32) dont l'autre extrémité présente une partie (33) de diamètre réduit qui s'étend dans un trou borgne (34) d'un appendice (35) du raidisseur (6'''),
- un joint torique (36) est placé entre la douille d'écartement (20) et l'appendice (35) et
- l'intervalle entre la partie cylindrique (33) de la tige d'assemblage (32) et le trou borgne (34) de l'appendice (35) est rempli par un matériau durcissable (38), un matériau plastique par exemple, qui peut être introduit sous pression à travers un perçage (37).

6. Moteur à combustion interne comportant des points de liaison internes selon la revendication 1, caractérisé en ce que
- la douille d'écartement est réalisée sous la forme d'un support élastique (40) ("Silentbloc") constitué d'une bague (43) en matière plastique maintenue entre une enveloppe intérieure (41) et une enveloppe extérieure (42)
- dont l'enveloppe intérieure (41) est reçue sur l'embout cylindrique (11''') de la vis (5''') et
- dont l'enveloppe extérieure (43) est reçue dans un trou borgne (34''') du raidisseur (6'''').

7. Moteur à combustion interne selon la revendication 6, caractérisé en ce que l'une ou l'autre des enveloppes intérieure (41) et extérieure (42) du support élastique (40), enveloppes qui coopèrent avec des pièces coordonnées du moteur, possède une forme conique.

8. Moteur à combustion interne comportant des points de liaison internes selon la revendication 6, caractérisé en ce que le support élastique (40) est réalisé sous une forme conique à la fois par son enveloppe intérieure (41) et par son enveloppe extérieure (42).
